# EUROPÄISCHE PATENTSCHRIFT

(11) **EP 0 377 695 B1**
(45) Veröffentlichungstag und Bekanntmachung des Hinweises auf die Patenterteilung: **30.11.1994**
(21) Anmeldenummer: 89905605.5
(22) Anmeldetag: 18.05.1989
(51) Int. Cl.: G06K 7/10

(54) **ABFRAGE- UND FERNWIRKGERÄT**
INTERROGATION AND REMOTE CONTROL DEVICE
APPAREIL D'INTERROGATION ET DE TELECOMMANDE

(30) Priorität: 28.05.1988 CH 2004/88
(43) Veröffentlichungstag der Anmeldung: 18.07.1990
(73) Patentinhaber: Stiftung Hasler Werke, CH-3000 Bern 14 (CH)
(72) Erfinder: NEUKOMM, Peter, A., CH-5430 Wettingen (CH)
(74) Vertreter: Schwerdtel, Eberhard, Dr.
(86) Internationale Anmeldenummer: CH8900090
(87) Internationale Veröffentlichungsnummer: WO8911701

(56) Entgegenhaltungen:
- EP-A- 0 254 954
- GB-A- 2 198 014
- US-A- 4 075 632
- US-A- 4 580 041

## Beschreibung

Die Erfindung betrifft ein Abfrage- und Fernwirkgerät entsprechend dem unabhängigen Anspruch 1.

Kontaktlos arbeitende Abfrage- und Fernwirkgeräte sind bekannt. So beschreibt beispielsweise die Schrift US 4 075 632 eine Abfrage- und Detektiereinrichtung, die sich aus zwei getrennten Teilgeraten zusammensetzt. Das eine Teilgerät umfasst eine eigenresonante Dipolantenne, an deren Klemmen eine HF-Gleichrichterschaltung für die Stromversorgung eines Messwert-Senders und eines digital betriebenen Belastungs-Umschalters angeschlossen ist. Das andere Teilgerät weist eine Richtantenne auf, die eine unmodulierte HF-Trägerwelle in Richtung zur genannten Dipolantenne ausstrahlt. Die letztere Antenne verursacht durch die Wirkung des Belastungs-Umschalters eine schwache, modulierte Rückstrahlung, die beim anderen Teilgerät durch eine Empfangsantenne aufgefangen wird. Nach einer Methode, die denjenigen der Radartechnik ähnelt und bei der die Phase zwischen der abgestrahlten HF-Trägerwelle und der empfangenen Rückstrahlung eine Rolle spielt, wird diese letztere detektiert. Die weitere Verarbeitung erfolgt durch eine spezielle Empfängereinrichtung. Diese Einrichtung arbeitet mit grossen Antennen und bei relativ grossen Abständen zwischen den beiden Teilgeräten im elektromagnetischen Fernfeld, was für mancherlei Anwendungen unerwünscht ist.

Aus der Schrift US-A-4,580,041 ist eine Einrichtung bekannt, die mit dem Nahfeld zweier Antennen arbeitet. Diese Einrichtung weist eine zentrale Leseeinheit und eine Vielzahl transportabler, passiver Identifizier-Einheiten auf, z.B. Kreditkarten. Die Leseeinheit besitzt einen Oszillator und eine Loop-Antenne sowie einen Signalempfänger, der an die Verbindung dieser beiden Einheiten angeschlossen ist. Jede Identifizier-Einheit besitzt eine spulenförmige Loop-Antenne, einen Zweiweg-Gleichrichter, einen Oszillator und einen Signal-Modulator. Der Modulator arbeitet mittels zweier gesteuerter Halbleiterschalter, die den Gleichrichter ein- und ausschalten und hierdurch die Belastung der Antennen ändern. Diese wechselnde Belastung wird durch den Signalempfänger der zentralen Leseeinheit registriert, die hieraus den Code der jeweiligen Identifizier-Einheit erkennt.

Diese Einrichtung ist speziell als Kartenleseeinrichtung zum Erkennen digitaler Codes konzipiert. Sie ist daher wenig geeignet für Zwecke der Telemetrie, bei der aus zum Teil unzugänglichen Bereichen langfristig Messdaten ermittelt und abgelesen werden sollen, z.B. aus in Versuchstieren implantierten Geräten.

Die Aufgabe der vorliegenden Erfindung besteht nun darin, eine Methode anzugeben, wie Messeinrichtungen oder ähnliches, die unzugänglich angeordnet sind, kontaktfrei und sicher abfragbar bzw. beeinflussbar sind. Insbesondere soll sich diese Methode eignen für Langzeit-Untersuchungen in lebenden Organismen. Sie soll aber auch geeignet sein zur alltäglichen Verwendung von jedermann in handlicher Form, z.B. in Kartenform.

Dieser Aufgabe ist durch die Merkmale von Anspruch 1 gelöst. Die abhängigen Ansprüche geben Ausgestaltungen der Erfindung an.

Im folgenden wird die Erfindung anhand von fünf Figuren beispielsweise näher beschrieben. Es zeigen:
- Fig. 1 -: Blockschaltbild eines Abfrage- und Fernwirkgerätes
- Fig. 2 -: Trägerwelle, Signal-Strom und modulierte Feldstärke
- Fig. 3 -: Zusammenhang zwischen Signal und Unterträgerfrequenz
- Fig. 4 -: detaillierteres, zweites Blockschaltbild des Abfrage- und Fernwirkgerätes
- Fig. 5 -: Schematische Darstellung eines Abfrage- und Fernwirkgerätes mit mehreren Teilgeräten.

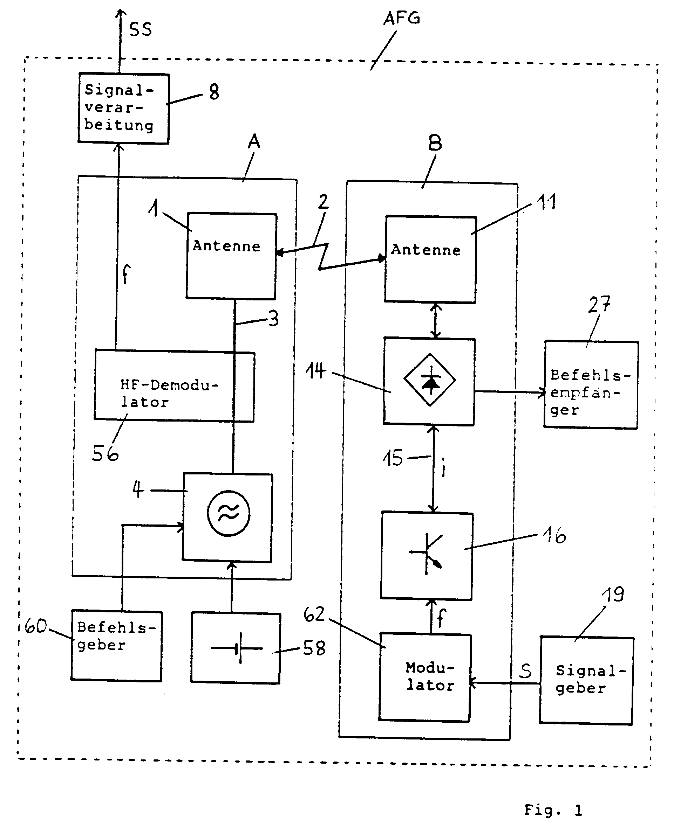

Fig. 1 zeigt ein Blockschaltbild eines Abfrage- und Fernwirkgerätes AFG. Dieses umfasst zwei Teilgeräte A und B, die voneinander galvanisch und räumlich mehr oder weniger weit getrennt sind und die über je eine Antennenanordnung 1 bzw. 11 miteinander in Wechselwirkung stehen, was durch einen geknickten Pfeil 2 symbolisiert ist.

Das erste Teilgerät A weist neben seiner Antennenanordnung 1 einen HF-Generator 4, eine HF-Zuleitung 3 zur Verbindung des Generators 4 und der Antennenanordnung 1 und einen HF-Demodulator 56 auf. Hierzu kommen als externe Einheiten eine Speiseeinheit 58, z.B. eine Batterie, zum Speisen des HF-Generators 4, eine Diskriminator- und Signalverarbeitungseinheit 8 sowie eventuell eine Befehlsgebereinheit 60.

Das zweite Teilgerät B weist neben seiner Antennenanordnung 11 einen HF-DC-Konverter 14, einen spannungsgesteuerten Widerstand 16 und einen Modulator 62 auf. Hierzu kommen als externe Einheiten ein Signalgeber 19, beispielsweise ein Messwertwandler, der eine Temperatur in eine Spannung wandelt, und eventuell eine Befehlsempfängereinheit 27.

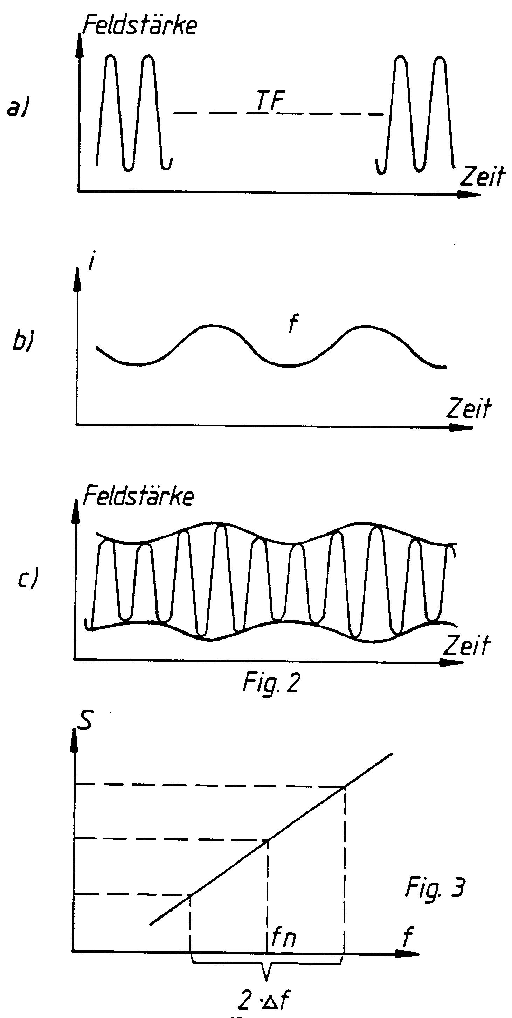

Das Abfrage- und Fernwirkgerät AFG arbeitet wie folgt: Der HF-Generator 4 erzeugt laufend eine nichtmodulierte Schwingung mit einer annähernd konstanten Frequenz von z.B. 27 MHz. Diese Frequenz wird im folgenden als Trägerfrequenz TF bezeichnet. Aufgrund der genannten Schwingung entsteht auf der Zuleitung 3 eine TF-Welle, die als fortlaufende Welle vom HF-Generator 4 zur Antennenanordnung 1 und als rücklaufende Welle von der Antennenanordnung 1 zurück zum HF-Generator 4 läuft. Die Antennenanordnung 1 ist so ausgebildet, dass sie für die Trägerfrequenz TF eigenresonant ist und einen erheblichen Teil der bei der Antennenanordnung 1 ankommenden Leistung der fortlaufenden Welle abstrahlt. Fig. 2 zeigt in Zeile a die abgestrahlte Welle der Trägerfrequenz TF.

Die Antennenanordnung 11 des zweiten Teilgerätes B ist ebenfalls eigenresonant für die Trägerfrequenz TF und empfängt einen Teil der abgestrahlten HF-Leistung. Im HF-DC-Konverter 14 wird hieraus ein Gleichstrom i bei etwa konstanter Spannung U erzeugt. Ein Teil dieses über die Verbindungsleitung 15 fliessenden Stromes i durchfliesst den spannungsgesteuerten Widerstand 16. Der Rest dient zum Speisen des Modulators 62, des Signalgebers 19 und eventuell des Befehlsempfängers 27.

Der Signalgeber 19 ermittelt über eine Mess-Sonde den Wert eines zu messenden Zustandes, z.B. eine Temperatur und gibt an seinem Ausgang ein Signal S ab, insbesondere eine dem jeweiligen Messwert zugeordnete Spannung. Der Modulator 62 wandelt dieses jeweilige Signal S in eine zugeordnete Unterträgerfrequenz f um. Fig. 3 zeigt den Zusammenhang zwischen dem Signal S und der Unterträgerfrequenz f, der aus messtechnischen Gründen bevorzugt linear ist. Die mittlere Unterträgerfrequenz ist als Nominalfrequenz fₙ angegeben, um welche die jeweilige aktuelle Unterträgerfrequenz in einem gewissen Bereich schwankt. Nach dem internationalen IRIG-Standard (Inter-Range Instrumentation Group) ist dabei eine Schwankungsbreite 2·Δf von etwa + 7,5% der Normfrequenz fₙ nicht zu überschreiten.

Die Unterträger-Nominalfrequenz fₙ ist gegenüber der Trägerfrequenz TF niederfrequent und liegt vorzugsweise im Kilohertz-Bereich. Die jeweils aktuelle Unterträgerfrequenz f entspricht wie beschrieben dem Signal S und ist damit Träger der zu übertragenden bzw. der abgefragten Information.

Durch den Modulator 62 und den ihm nachgeschalteten, spannungsgesteuerten Widerstand 16 wird die Stärke des Stromes i sinusförmig mit der jeweiligen Unterträgerfrequenz f variiert. (Fig. 2, Zeile b.) Die Stromschwankungen bilden dabei eine Amplitudenmodulation mit konstanter Modulationstiefe und der jeweiligen, die Information tragenden Unterträgerfrequenz f.

Der in der beschriebenen Weise amplitudenmodulierte Strom i stellt für die zweite Antennenanordnung 11 eine sinusförmig schwankende Energiesenke dar, welche die Antennenanordnung 11 entsprechend belastet und die Feldstärke des Trägerfrequenzwelle in der Nähe der Antenne 111 absorptionsmoduliert. Fig. 2, Zeile c zeigt die auf diese Weise modulierte Feldstärke in der Nähe der Antennenanordnung 11.

Die mit der jeweiligen Unterträgerfrequenz f schwankende Belastung wirkt zurück zur ersten Antennenanordnung 1 des ersten Teilgerätes A und beeinflusst vor allem die auf der HF-Zuleitung 3 rücklaufende Welle. Der HF-Demodulator 56 detektiert die Schwankungen dieser rücklaufenden Welle und gibt an seinem Ausgang ein Sinusignal mit der jeweiligen Unterträgerfrequenz f ab. Die Diskriminator- und Signalverarbeitungseinheit 8 ermittelt hieraus unter Verwendung des Zusammenhangs von Fig. 3 das Signal S bzw. den vom Signalgeber 19 ermittelten Wert des gemessenen physikalischen Zustandes. Dieser Wert kann dann entweder analog oder digital aufgezeichnet oder als Ausgangssignal SS ausgegeben werden.

Bei der beschriebenen Arbeitsweise wird vorausgesetzt, dass die beiden Antennenanordnungen 1 und 11 in Kopplung stehen. Hierunter wird eine so starke Wechselwirkung verstanden, dass die Rückwirkung auf die rücklaufende Welle durch den HF-Demodulator 56 detektierbar ist. Eine solche Kopplung besteht nicht, wenn sich die zweite Antennenanordnung 11 im Fernfeld des von der ersten Antennenanordnung 1 abgestrahlten Feldes befindet. Eine solche Kopplung besteht dagegen in ihrem Nahfeld, also vorwiegend bei relativ geringem räumlichen Abstand beider Antennenanordnungen 1 und 11.

Die beim Betrieb des Abfrage- und Fernwirkgerätes AFG entstehende Streustrahlung kann mit einem nicht gezeigten, konventionellen AM-Empfänger (Amplitudenmodulation) empfangen und demoduliert werden. Das hierbei entstehende Ausgangssignal lässt sich ebenfalls in einem Diskriminator entsprechend der Einheit 8 auswerten.

Die eventuell vorhandene Befehlsgebereinheit 60 ermöglicht eine Modulation der Trägerfrequenz TF an deren Quelle, d.h. im HF-Generator 4. Diese Modulation kann im zweiten Teilgerät B empfangen und von der Befehlsempfängereinheit 27 ausgewertet werden, so dass zum Beispiel ein nicht gezeigter, nachgeschalteter Aktuator aktiviert oder sonstwie beeinflusst werden kann. Es ist somit möglich, mit dem Abfrage- und Fernwirkgerät AFG Information in beiden Richtungen, d.h. vom zweiten B zum ersten Teilgerät A und umgekehrt vom ersten A zum zweiten Teilgerät B zu übertragen.

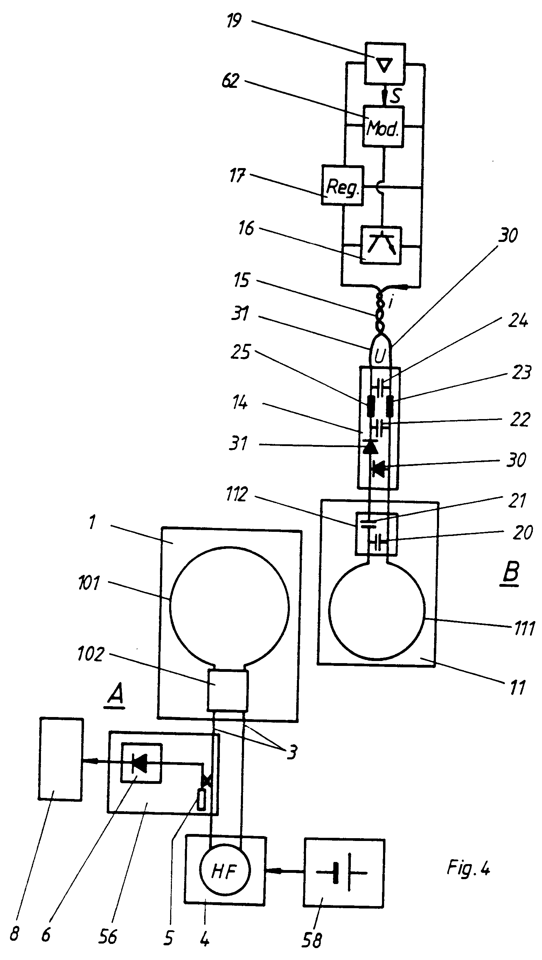

Fig. 4 zeigt ein detaillierteres, weiteres Blockschaltbild des Abfrage- und Fernwirkgerätes AFG. Im Bild links unten ist das erste Teilgerät A dargestellt. Dessen Antennenanordnung 1 setzt sich aus einer Schleifenantenne 101 und einem zugeordneten Anpassnetzwerk 102 zusammen. Der Durchmesser der Antenne 101 beträgt beispielsweise 10 cm und entspricht damit bei der genannten Trägerfrequenz TF von 27 MHz nur einem Bruchteil der zugehörigen Wellenlänge. Das Anpassnetzwerk 102 ist so ausgebildet, dass sich die genannte Eigenresonanz der Antenennanordnung 1 für die Trägerfrequenz TF ergibt.

Die HF-Zuleitung 3 ist eine Zweidrahtleitung. Ausgebildet als Koaxialleitung kann sie ohne weiteres 100 m lang sein, also eine sehr erhebliche Länge aufweisen.

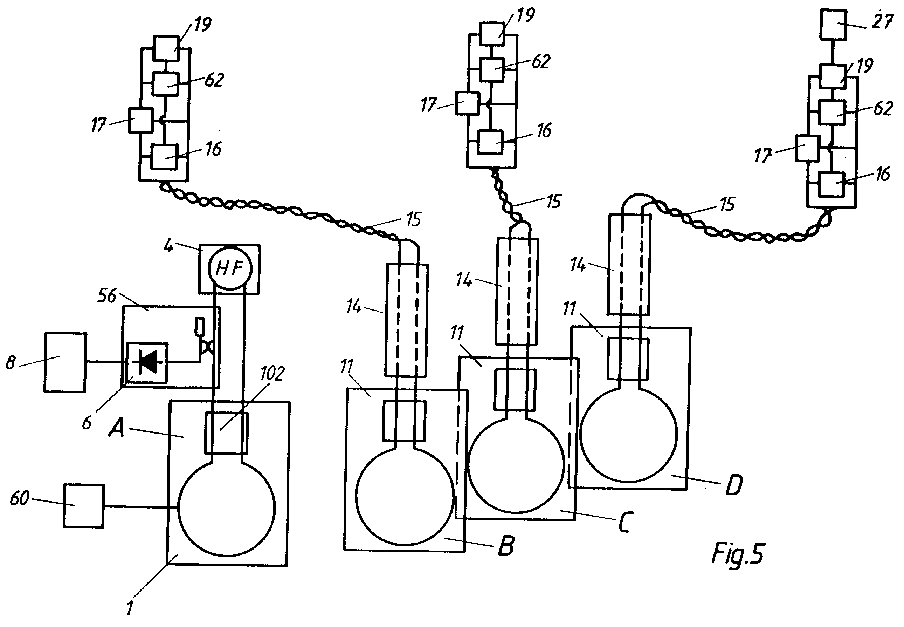

Der HF-Demodulator 56 ist ausgebildet als ein Richtkoppler 5 mit einer nachgeschalteten Detektordiode 6. Der Richtkoppler 5 ist so an die eine Ader der HF-Zuleitung 3, den Innenleiter des genannten Koaxialkabels, angekoppelt, dass die rücklaufende Welle abgetastet wird. (In den Figuren 4 und 5 ist das Symbol für den Richtkoppler versehentlich richtungsfalsch gezeichnet.) Die Detektordiode 6 ist eine HF-Diode zur Trennung der Unterträgerfrequenz f von der Trägerfrequenz TF.

Die Antennenanordnung 11 des zweiten Teilgerätes B umfasst ebenfalls eine Schleifenantenne 111 mit einem zugeordneten Anpassnetzwerk 112. Das letztere setzt sich aus zwei Kondensatoren 20, 21 zusammen, von denen der eine (20) als Parallelkapazität die beiden Anschlüsse der Schleifenantenne 111 verbindet und der andere (21) als Ankopplungskapazität und Gleichstromsperre dient. Die Dimensionierung ist so gewählt, dass sich einerseits die genannte Eigenresonanz der Antennanordnung 11 für die Trägerfrequenz TF ergibt. Andererseits sollte die Kapazität des zweiten Kondensators 21 höchstens ein Drittel der Kapazität des ersten Kondensators 20 betragen. Hierdurch ergibt sich bei korrekter Belastung der Antennenanordnung 11 durch den nachgeschalteten HF-DC-Konverter 14 und die nachfolgenden Einheiten 16, 17, 62, 19 ein maximaler Energiebezug aus dem elektromagnetischen Trägerfeld. Bei Leerlauf oder Kurzschluss in den nachfolgenden Einheiten 16, 17, 62, 19 wird der Energiebezug kleiner, da sich hierbei eine wesentliche Resonanzverschiebung der Antennenanordnung 11 ergibt. Dieser Effekt ist von erheblichem Vorteil, wie weiter unten noch erklärt wird.

Der Durchmesser der Antenne 111 ist bevorzugt etwas geringer als derjenige der Antenne 101, z.B. beträgt er 8 cm.

Der HF-DC-Konverter 14 setzt sich aus zwei Gleichrichterdioden 30, 31, zwei Ladekondensatoren 22, 24 und zwei Filterdrosseln 23, 25 zusammen. Für den Kondensator 22 gilt bevorzugt die Dimensionierungsregel, dass seine Kapazität nur so gross ist, dass der an ihm auftretende Rippel des Ladestromes zwischen etwa 10 und 20% der Spannung U an den beiden Ausgangspolen 30, 31 des Konverters 14 beträgt. Hierdurch werden die bei jeder Periode der Trägerfrequenz TF auftretenden Ladestrom-Impulse niedrig und breit, was sich vorteilhaft auf die Diodenbelastung und die Niedrighaltung von Oberschwingungen der Trägerfrequenz TF auswirkt. Die beiden Filterdrosseln 23, 25 bilden zusammen mit dem Kondensator 24 ein LC-Filter zum Glätten der an den Ausgangspolen auftretenden Spannung U bzw. zur Unterdrückung der verbleibenden Hochfrequenzanteile. Der HF-DC-Konverter 14 bildet damit eine Einheit, die einen hohen HF-DC-Konversions-Wirkungsgrad aufweist, die höhere Amplituden von Oberschwingungen der Trägerfrequenz TF wirkungsvoll verhindert und die eine HF-entkoppelte Spannung U abgibt.

Die Verbindungsleitung 15 zwischen dem HF-DC-Konverter 14 und dem Spannungsgesteuerten Widerstand 16 unterliegt keinen besonderen Anforderungen, da es sich bei ihr im wesentlichen um eine Gleichstromleitung handelt. Ihre Länge kann von wenigen Zentimetern bis zu einigen Metern betragen. Bevorzugt ist sie verdrillt, um Störungen von aussen abzuwehren.

Ueber die Verbindungsleitung 15 von den beschriebenen Einheiten abgesetzt sind der spannungsgesteuerte Widerstand 16, ein Spannungsregulator 17, der Modulator 62 und der Signalgeber 19.

Der Widerstand 16 ist beispielsweise als npn-Transistor mit einer geeigneten Beschaltung zur Linearisierung und Temperaturkompensation ausgebildet. Der Modulator 62 ist ein spannungsgesteuerter Oszillator VCO (Voltage Controlled Oscillator) und der Signalgeber 19 setzt sich wie beschrieben aus einer Mess-Sonde und einem Messwandler zusammen, ausgebildet für die jeweilige Messaufgabe.

Der Oszillator des Modulators 62 ist ausgebildet für die Normfrequenz fₙ (Fig. 3). Er variiert in Abhängigkeit von Signal S bzw. der vom Signalgeber 19 abgegebenen Mess-Spannung seine Unterträgerfrequenz f in der beschriebenen Weise. Mit der jeweiligen Unterträgerfrequenz f steuert er den Widerstand 16. Dies bedeutet eine sinusförmige Modulation des durch den Widerstand 16 fliessenden Stromes i mit der jeweiligen Unterträgerfrequenz f bei konstanter Modulationstiefe, wie sie anhand von Fig. 2 beschrieben wurde.

Zur Verminderung der Störabhängigkeit ist es schliesslich noch vorteilhaft, wenn in der Diskriminator- und Signalverarbeitungseinheit 8 ein Bandpassfilter enthalten ist, das nur den Bereich der übertragenen Unterträgerfrequenz f passieren lässt.

Fig. 5 zeigt schematisch ein Abfrage- und Fernwirkgerät AFG, das zusätzlich zum bisher besprochenen ersten (A) und zweiten Teilgerät B weitere Teilgeräte C, D, E aufweist. Diese weiteren Teilgeräte entsprechen im wesentlichen dem zweiten Teilgerät B, jedoch verwendet jedes einen zugeordneten, anderen Frequenzbereich für seine Nominal-Unterträgerfrequenz fB bis fD. Diese Frequenzen sind bevorzugt nach dem genannten IRIG-Standard gestaffelt, so dass die Unterträgerfrequenzen fB bis fD und ihre Oberschwingungen sich gegenseitig kaum stören können. Zur geringen gegenseitigen Beeinflussung trägt weiter die sinusförmige Modulation bei, da bei dieser keine bzw. nur geringe Oberschwingungen auftreten.

Jedes der Teilgeräte B bis D bildet eine vollständig unabhängige, in sich geschlossene Einheit. Jede der Antennanordnungen 11B bis 11D muss jedoch in der genannten Kopplung mit der Antennenanordnung 1 des ersten Teilgerätes A stehen. Hierzu ist es vorteilhaft, wenn alle Antennen 111B bis 111D in zueinander eng benachbarten Ebenen angeordnet werden, d.h. sozusagen flächengleich übereinander gelegt werden. Bei der genannten Dimensionierung ergibt sich dann eine gleichmässige Energieverteilung auf alle Teilgeräte B bis D, d.h. jede der Antennen 111B bis 111D absorbiert dann etwa die gleiche HF-Leistung.

Falls eine unterschiedliche Energieverteilung gewünscht wird, kann dies durch unterschiedliche Antennengrössen, durch Ändern des Kopplungsfaktors und/oder durch geeignete, zusätzliche Elemente im Anpassnetzverk 112 auf einfache Art erreicht werden.

Bei der anhand von Fig. 4 erläuterten Dimensionierung des jeweiligen Anpassnetzwerkes 112 und der sinusförmigen Modulation des jeweiligen Konstantspannungs-Stromes i stören sich die Teilgeräte B bis D gegenseitig kaum, so dass ein echter frequenzmultiplexierter Betrieb möglich ist. Dieser ermöglicht die gleichzeitige Ueberwachung verschiedener physikalischer Grössen. Das genannte Bandpassfilter in der Diskriminator- und Signalverarbeitungseinheit 8 wird dabei vorteilhaft auf die verschiedenen Frequenzbereiche so abgestimmt, dass nur die Unterträgerfrequenzen fB bis fD passieren können.

Die geringe gegenseitige Beeinflussung der Teilgeräte B bis D ändert sich auch nicht, wenn eines der Teilgeräte B bis D einen internen Kurzschluss oder eine interne Stromunterbrechung erleidet. Die genannte, hierbei auftretende Verstimmung der jeweils zugeordneten Antennenanordnung 11 bewirkt dies. Diese Eigenschaft ist sehr wichtig, wenn die Teilgeräte unzugänglich untergebracht sind, z.B. wenn sie in einem lebenden Organismus implantiert sind.

Statt des genannten frequenzmultiplexierten Betriebes von mehreren parallel betriebenen Teilgeräten B bis D kann natürlich auch ein zeitmultiplexierter Betrieb vorgesehen werden, insbesondere ein gesteuerter Start/Stopp-Betrieb. Weiter kann auch ein einzelnes Teilgerät, z.B. das Gerät B, mehrere angeschlossene Signalgeber 19 seriell abfragen.

Aufgrund der langen Verbindungsleitungen 15 können durch die Teilgerate B bis D gleichzeitig räumlich recht verschiedene Gebiete mit Signalgebern 19 versehen werden. Gleichzeitig können durch diese Geber bzw. Messwertwandler 19 verschiedene physikalische Grössen wie Temperatur, Druck, Taktfrequenz usw. erfasst werden.

Wird bei einen der Teilgeräte B bis D ein Befehlsempfänger 27 angeordnet, dann kann üher diesen Empfänger eine Aktion ausgelöst werden, z.B. ein Sensor aktiviert werden.

Insgesamt sind folgende Kommunikationsfälle mit dem Abfrage- und Fernwirkgerät AFG lösbar:
- Informationsübertragung von einem oder von mehreren Teilgeräten B bis D zu einer gemeinsamen Auswertestation, d.h. der Diskriminator- und Signalverarbeitungseinheit 8.
- Informationsübetragung vom ersten Teilgerät A zum zweiten B bzw. einem weiteren Teilgerät C bis D. Hierzu sind der Befehlsgeber 60 und der Befehlsempfänger 27 notwendig.
- Informationsübertragung vom zweiten B oder einem weiteren Teilgerät C bis D zu einem anderen dieser Teilgeräte, indem das erste Teilgerät A als Energielieferant und Vermittler zwischengeschaltet wird.
- Informationsübertragung vom zweiten Teilgerät B zu einem entfernten AM-Empfänger unter Verwendung der von den Antennenanordnungen 1, 11 ausgehenden Streustrahlung.

Anstelle der beschriebenen Modulation mit den Unterträgerfrequenzen f sind auch andere Signalcodierungen möglich, z.B. PCM-Codierungen (Puls Code Modulation). Weiter kann die Hochfrequenz-Amplitudenmodulation durch eine entsprechende Phasenmodulation ersetzt werden.

Im HF-Demodulator 56 lässt sich die Detektordiode 6 durch einen Phasendiskriminator ersetzen.

Das Abfrage- und Fernwirkgerät AFG ist kostengünstig, weitgehend störsicher gegen fremde Funksignale und sonstige Störungen, robust und weitgehend ausfallsicher. Es kann ein- oder mehrkanalig bei Uebertragungsstrecken bis zu 1 m eingesetzt werden (bei den angegebenen Dimensionen und Werten) und erlaubt dauernde oder beliebige, stichprobenartige Abfragen und Ueberwachungen über Zeiträume von vielen Jahren. Es eignet sich daher beispielsweise für Anwendungen, bei denen eine Implantation in einen organischen, lebenden Körper erforderlich ist. Bei der genannten Trägerfrequenz TF von 27 MHz kann organisches, tierisches Gewebe von 5 und mehr Zentimetern bei Sendeleistungen von nur 1 W einwandfrei überwunden werden. Allgemein sollten bei Anwendungen in organischen Geweben kein Trägerfrequenzen TF über 50 MHz verwendet werden, da für höhere Frequenzen die Leistungsdichte mit zunehmender Tiefe im Gewebe zu rasch abnimmt. Weiter ist es bei Anwendungen in organischem Gewebe vorteilhaft, wenn die Antenne 101 des ersten Teilgerätes A als elektrisch abgeschirmte Schleifenantenne ausgebildet ist, da eine solche Antenne in ihrem Nahbereich ein vorwiegend magnetisches Wechselfeld aufbaut und weniger verstimmt wird.

Wegen der unvermeidlichen Körperbewegungen und den damit gekoppelten, mechanischen Schwingungen der Schleifenantennen 101, 111 sollten zu geringe Unterträgerfrequenzen f vermieden werden. Zu bevorzugen sind Frequenzen f im genannten Kilohertz-Bereich.

Die Antenne 101 wird mit Vorteil aussen an der Haut des lebenden Körpers, d.h. eines Versuchstieres befestigt. Die Energiezufuhr kann dann über die genannte lange HF-Zuleitung 3 erfolgen, was der Bewegungsfreiheit des Tieres einen erheblichen Spielraum gibt. In anderer Version kann die Speiseeinheit 58 in Form einer Batterie zusammen mit dem ersten Teilgerät A direkt auf dem Tier angeordnet werden. In diesem Fall ist es notwendig, die empfangenen Daten entweder in der Diskriminator- und Signalverarbeitungseinheit 8 zu speichern oder die Streustrahlung mit einem konventionellen AM-Empfänger (Amplitudenmodulation) aufzufangen und per Funk der Diskriminator- und Signalverarbeitungseinheit 8 zuzuführen.

Wegen eventueller Verstimmungen der Antennenanordnungen 11 durch das umgebende organische Gewebe ist es wichtig, dass die Trägerfrequenz TF variierbar und die Antennenanordnung 1 auf die jeweilige Trägerfrequenz TF abstimmbar ist. Diese Forderung ist durch den HF-Generator 4 und das Anpassnetzwerk 102 einfach zu erfüllen.

Als weitere Anwendungen sind solche zu nennen, bei denen das zweite Teilgerät B und der angeschlossene Signalgeber 19 in einem ortsfesten Träger unzugänglich eingebettet sind. Hier ist zum Beispiel zu denken an die Einbettung in Betonelemente zur Ueberwachung von z.B. Korrosion, Feuchte, Temperatur, pH-Wert usw., angewendet beispielsweise bei Brücken und Staudämmen.

Als dritte Kategorie von Anwendungen sind solche zu nennen, bei denen eine kontaktlose Karte abgefragt oder beeinflusst werden soll oder bei denen umgekehrt eine derartige Karte als schlüsselähnliches Element dient. Im besonderen handelt es sich um Karten, die mit einer Zugangskontroll-Einrichtung zusammenwirken oder um Kredit- und Scheckkarten. Hierbei beinhaltet ein kartenförmiges Trägerelement jeweils wenigstens ein vollständiges zweites Teilgerät B einschliesslich eines Signalgebers 19, der dann beispielsweise als abfragbarer Digitalspeicher ausgebildet ist.

Als vierte Kategorie von Anwendungen sind Raum-Ueberwachungen zu nennen, bei denen die erste Antenne 101 eine erhebliche Grösse aufweist, z.B. 3 m Durchmesser. Hierbei umfasst das Nahfeld ein erhebliches Volumen, z.B. einen Raum, der zum Betreten eine Zutrittsberechtigung erfordert. Diese Berechtigung wird durch das zweite Teilgerät B gegeben, welches die zutrittsberechtigte Person mitführt, und welches das erste Teilgerät A über die Berechtigung informiert. Hierbei kann auch ein zusatzlicher AM-Empfänger verwendet werden, der die im Nahfeld der Antennenanordnung 1 auftretende Streustrahlung empfängt und auswertet.

Jede der Anwendungen des Abfrage- und Fernwirkgerätes AFG zeichnet sich insgesamt dadurch aus, dass ein galvanisch nicht zugängliches Teilgerät B bis D abgefragt wird, welches keine eigene Energieversorgung aufweist, dass im Nahfeld einer HF-Energie abstrahlenden ersten Antennenanordnung 1 gearbeitet wird und dass die Rückwirkung durch Absorptionsmodulation insbesondere über die gleiche Antennenanordnung 1 erfolgt.

## Patentansprüche

1. Abfrage- und Fernwirkgerät,
umfassend ein erstes (A) und ein zweites Teilgerät (B) mit Antennenanordnungen (1, 11) über deren Nahfeld die Teilgeräte (A, B) in Wirkverbindung bringbar sind, wobei das erste Teilgerät (A) einen HF-Generator (4) und einen Signalempfänger (56) aufweist, die über eine gemeinsame Verbindung (3) mit der Antennenanordnung (1) des ersten Teilgerätes verbunden sind,
wobei das zweite Teilgerät (B) eine Gleichrichtereinheit (14) zur Erzeugung einer Gleichspannung und einen Signalerzeuger (16, 17, 19, 62) aufweist, die mit der Antennenanordnung (11) des zweiten Teilgerätes so verbunden sind, dass diese im Rhythmus eines Signals (s), das die abzufragenden Daten beinhaltet, unterschiedlich belastet wird,
wobei die Antennenanordnungen (1, 11) Antennen (101, 111) mit spulenartiger Ausbildung umfassen, die über Kondensatoren (20) abstimmbar sind,
wobei im ersten Teilgerät (A) die Verbindung als eine bis zu 100 m lange Koaxialleitung (3) ausgebildet ist, an deren Innenleiter als Signalempfänger ein Richtkoppler (5) zum Abtasten einer von der Antennenanordnung (1) zum HF-Generator (4) rücklaufenden Welle und eine nachgeschaltete Detektordiode (6) angeschlossen sind,
wobei im zweiten Teilgerät (B) als Gleichrichtereinheit (14) ein Einweggleichrichter (31) mit nachfolgender Siebkette (22, 23, 24, 25) vorgesehen ist, wobei der Einweggleichrichter (31) über einen Kondensator (21) mit der Antenne (111) des zweiten Teilgerätes und über eine Verbindungsleitung (15) mit einem spannungsgesteuerten Widerstand (16), einem Spannungsregulator (17), einem Modulator (62) und einem Signalgeber (19) verbunden ist, die zusammen den Signalerzeuger bilden und wobei der mit dem Einweggleichrichter verbundene Kondensator (21) höchstens ein Drittel der Kapazität des Kondensators (20) beträgt, der zur Abstimmung der Antenne (111) des zweiten Teilgerätes dient, und wobei beide Antennen (101, 111) als Schleifenantennen ausgebildet sind.

2. Abfrage und Fernwirkgerät nach Anspruch 1,
dadurch gekennzeichnet,
dass die Antenne (101) des ersten Teilgerätes (A) als elektrisch geschirmte Antenne ausgebildet ist und einen grösseren Durchmesser als die Antenne (111) des zweiten Teilgerätes (B) aufweist.

3. Abfrage- und Fernwirkgerät nach Anspruch 1,
dadurch gekennzeichnet,
dass die Verbindungsleitung (15) im zweiten Teilgerät (B) eine Länge zwischen wenigen Zentimetern und mehreren Metern aufweist.

4. Abfrage- und Fernwirkgerät nach Anspruch 1,
dadurch gekennzeichnet,
dass die Siebkette zwei Kondensatoren (22, 24) und zwei Drosseln (23, 25) umfasst, wobei die Drosseln (23, 24) die Pole der Kondensatoren (22, 24) miteinander verbinden, und dass die Kapazität des dem Einweggleichrichter (31) benachbarten Kondensators (22) so gewählt ist, dass der Rippel der an diesem Kondensator (22) auftretenden Ladespannung zwischen etwa 10% und 20% der Konstantspannung (U) am Ausgang der Siebkette beträgt.

5. Abfrage- und Fernwirkgerät nach Anspruch 1,
dadurch gekennzeichnet,
dass wenigstens ein weiteres zweites Teilgerät (C, D) vorgesehen ist, und
dass alle zweiten Teilgeräte (B, C, D) gegenüber dem gemeinsamen ersten Teilgerät (A) gleichberechtigt sind.

6. Abfrage- und Fernwirkgerät nach Anspruch 5,
dadurch gekennzeichnet,
dass jedem zweiten Teilgerät (B, C, D) eine unterscheidbare, individuelle, gegenüber der Trägerfrequenz (TF) des HF-Generators (4) niedrige Unterträgerfrequenz (fB, fC, fD) zugeordnet ist, und
dass der spannungsgesteuerte Widerstand (16) so ausgebildet ist, dass er den Gleichstrom (i) auf der Verbindungsleitung (15) im wesentlichen sinusförmig mit der jeweils zugeordneten Unterträgerfrequenz (fB, fC, fD) moduliert.

7. Abfrage- und Fernwirkgerät nach Anspruch 6,
dadurch gekennzeichnet,
dass die Unterträgerfrequenzen (fB, fC, fD) nach dem IRIG-Standard gestaffelt sind.

8. Abfrage- und Fernwirkgerät nach Anspruch 6,
durch gekennzeichnet,
dass die Antennen (111) aller zweiten Teilgeräte (B, C, D) in zueinander eng benachbarten Ebenen so angeordnet sind, dass sie im wesentlichen die gleiche Fläche bedecken.

9. Abfrage- und Fernwirkgerät nach Anspruch 1,
dadurch gekennzeichnet,
dass dem ersten Teilgerät (A) eine Befehlsgebereinheit (60) und dem zweiten Teilgerät (B) eine Befehlsempfängereinheit (27) zugeordnet ist.

## Claims

1. Interrogation and remote control device,
comprising a first (A) and a second partial device (B) with antenna arrangements (1, 11), which partial devices (A, B) can be brought in reciprocal action via the short-range field of said antenna arrangements (1, 11),
wherein the first partial device (A) comprises a high-frequency generator (4) and a signal receiver (56), which via a joint connection (3) are connected with the antenna arrangement (1) of the first partial device (A),
wherein the second partial device (B) comprises a rectifying unit (14) for generating a constant-voltage and a signal generator (16, 17, 19, 62), which are connected with the antenna arrangement (11) of the second partial device in such a way, that this arrangement (11) is loaded differently with the rythm of a signal (s) comprising the data to be interrogated,
wherein the antenna arrangements (1, 11) comprise antennas (101, 111) with looplike shape and being tunable by capacitors (20),
wherein in the first partial device (A) said connection is an up to 100 m long coaxial line (3), at the inner line of which as said signal receiver a directional coupler (5), with a subsequent detector diode (6), is connected for scanning a wave return coming from the antenna arrangement (1) to the high-frequency generator (4),
wherein in the second partial device (B) as said rectifying unit (14) a half-wave rectifier (31) with a subsequent filter network (22, 23, 24, 25) is used, wherein said half-wave rectifier (31) is connected via a capacitor (21) with the antenna (111) of the second partial device (B), and is connected via a connection line (15) with a voltage-controlled resistor (16), with a voltage regulator (17), with a modulator (62) and with a signal transmitter (19), which units together form said signal generator, and wherein said capacitor (21) connected with said half-wave rectifier (31) has a capacitance, which capacitance at most is one third of the capacitance of said capacitor (20) tuning the antenna (111) of the second partial device (B), and wherein both antennas (101, 111) are single loop antennas.

2. Interrogation and remote control device according to claim 1,
characterized in
that the antenna (101) of the first partial device (A) is constructed as an electrically shielded antenna and comprises a greater diameter than the antenna (111) of the second partial device (B).

3. Interrogation and remote control device according to claim 1,
characterised in
that the connection line (15) of the second partial device (B) has a length between some few centimeters and some meters.

4. Interrogation and remote control device according to claim 1,
characterised in
that said filter network comprises two capacitors (20, 24) and two inductors (23, 25), wherein the inductors (23, 25) connect the poles of the capacitors (20, 24), and that the capacitance of the capacitor (22) being neighboured to the half-wave rectifier (31) is such, that the ripple of the charging voltage at this capacitor (22) is between approximately 10 and 20% of the constant voltage (U) at the output of the filter network.

5. Interrogation and remote control device according to claim 1,
characterized in
that at least one additional second partial device (C, D) is provided, and
that all second partial devices (B, C, D) are equally entitled relative to the common first partial device (A).

6. Interrogation and remote control device according to claim 5,
chracterized in
that each second partial device (B, C, D) is allocated a distinguishable, individual subcarrier frequency (fB, fC, fD), the subcarrier frequencies being low relative to the carrier frequency (TF) of said high-frequency generator (4), and
that the voltage-controlled resistor (16) is constructed such, that the direct current (i) on the connection line (15) essentially is modulated sinusoidally with the in each case allocated subcarrier frequency (fB, fC, fD).

7. Interrogation and remote control device according to claim 6,
characterized in
that the subcarrier frequencies (fB, fC, fD) are graduated according to the IRIG standard.

8. Interrogation and remote control device according to claim 6,
characterized in
that the antennas (111) of all second partial devices (B, C, D) are arranged in narrow neighboured planes in such a way, that they essentially cover the same surface area.

9. Interrogation and remote control device according to claim 1,
characterized in
that an instruction transmitter unit (60) is allocated to the first partial device (A) and an instruction receiver unit (27) to the second partial device (B).

## Revendications

1. Appareil d'interrogation et de télécommande comprenant un premier (A) et un second appareil partiel (B) avec un agencement d'antennes (1, 11) dont le champ rapproché sert à mettre les appareils partiels (A, B) en liaison de télécommande, le premier appareil partiel (A) étant doté d'un générateur HF (4) et d'un poste récepteur à signaux (56) reliés au moyen d'une connexion commune (3) avec l'agencement d'antennes (1) du premier appareil partiel,
le deuxième appareil partiel (B) étant doté d'une unité de redressement (14) pour la génération d'une tension continue et d'un générateur de signaux (16, 17, 19, 62), reliés avec l'agencement d'antennes (11) du deuxième appareil partiel de façon à ce que cet agencement soit sollicité différemment en fonction du rythme d'un signal (s) contenant les données à interroger,
les agencements d'antennes (1, 11) comprenant des antennes (101, 111) réalisées en forme de bobines et dont l'alignement se fait par le biais de condensateurs (20),
la connexion dans le premier appareil partiel (A) étant réalisée en tant que ligne coaxiale (3) d'une longueur de jusqu'à 100 m, au conducteur intérieur de laquelle sont raccordés un coupleur directif (5) comme récepteur à signaux destiné à balayer une onde rétrogradant de l'agencement d'antennes (1) vers le générateur HF (4) et, en aval, une diode de détection (6), un redresseur demi-onde (31) avec, en aval, un filtre en échelle (22, 23, 24, 25) étant prévu dans le deuxième appareil partiel (B) en tant qu'unité de redressement (14), le redresseur demi-onde (31) étant relié par le biais d'un condensateur (21) à l'antenne (111) du deuxième appareil partiel et par l'intermédiaire d'une ligne de raccordement (15) à une résistance commandée en tension (16) , un régulateur de tension (17), un modulateur (62) et un poste transmetteur de signaux (19) formant ensemble le générateur de signaux, le condensateur (21) relié au redresseur demi-onde présentant, au maximum, le tiers de la capacité du condensateur (20) servant à l'alignement de l'antenne (111) du deuxième appareil partiel, et les deux antennes (101, 111) étant réalisées comme des antennes à cadre.

2. Appareil d'interrogation et de télécommande selon revendication 1, caractérisé en ce que l'antenne (101) du premier appareil partiel (A) est réalisée en tant qu'antenne à blindage électrique et que son diamètre est plus grand que celui de l'antenne (111) du deuxième appareil partiel (B).

3. Appareil d'interrogation et de télécommande selon revendication 1, caractérisé en ce que la ligne de raccordement (15) dans le second appareil partiel (B) a une longueur située entre quelques centimètres et plusieurs mètres.

4. Appareil d'interrogation et de télécommande selon revendication 1, caractérisé en ce que le filtre en échelle comprend deux condensateurs (22, 24) et deux bobines de self (23, 25), les bobines (23, 24) reliant les pôles des condensateurs (22, 24) entre eux, et que la capacité du condensateur (22) contigu au redresseur demi-onde (31) est sélectionnée de manière à ce que le ronflement de la tension de charge survenant au niveau de ce condensateur (22) se situe entre 10% et 20% de la tension constante (U) à la sortie du filtre en échelle.

5. Appareil d'interrogation et de télécommande selon revendication 1, caractérisé en ce qu'au moins un autre deuxième appareil partiel (C, D) est prévu, et que tous les seconds appareils (B, C, D) sont équivalents dans leur rapport avec le premier appareil partiel (A).

6. Appareil d'interrogation et de télécommande selon revendication 5, caractérisé en ce que à chaque deuxième appareil partiel (B, C, D) est attribuée une fréquence sous-porteuse (fB, fC, fD) différenciable, individuelle et basse par rapport à la fréquence porteuse (FP) du générateur HF (4), et la résistance commandée en tension (16) étant réalisée de manière à ce qu'il soit capable de moduler le courant continu (i) sur la ligne de raccordement (15), en principe sous une forme sinusoïdale avec la fréquence sous-porteuse (fB, fC, fD) attribuée chaque fois.

7. Appareil d'interrogation et de télécommande selon revendication 6, caractérisé en ce que les fréquences sous-porteuses (fB, fC, fD) sont échelonnées suivant le standard IRIG .

8. Appareil d'interrogation et de télécommande selon revendication 6, caractérisé en ce que les antennes (111) de tous les seconds appareils partiels (B, C, D) sont agencées à des niveaux très rapprochés réciproquement, de manière à ce qu'elles couvrent, en principe, la même surface.

9. Appareil d'interrogation et de télécommande selon revendication 1, caractérisé en ce que le premier appareil partiel (A) est doté d'une unité d'émission de commandes (60) et que le second appareil (B) est doté d'une unité de réception de commandes (27).
